# FASCICULE DE BREVET EUROPEEN

(11) **EP 3 197 676 B1**
(45) Date de publication et mention de la délivrance du brevet: **01.08.2018**
(21) Numéro de dépôt: 15729757.3
(22) Date de dépôt: 29.04.2015
(51) Int. Cl.: B32B 5/12, B32B 3/10

(54) **PROCÉDÉ DE FABRICATION D'UNE PIÈCE COMPOSITE À BASE DE RÉSINE AQUEUSE ET PIÈCE COMPOSITE ISSUE D'UN TEL PROCÉDÉ**
VERFAHREN ZUR HERSTELLUNG EINES AUS WÄSSRIGEM HARZ HERGESTELLTEN VERBUNDTEILS UND VERBUNDTEIL AUS SOLCH EINEM VERFAHREN
METHOD FOR PRODUCING A COMPOSITE PART MADE FROM AQUEOUS RESIN AND COMPOSITE PART COMING FROM SUCH A METHOD

(30) Priorité: 24.09.2014 FR 1459031
(43) Date de publication de la demande: 02.08.2017
(73) Titulaire: Faurecia Automotive Industrie, 92000 Nanterre (FR); Lineo NV, 8760 Meulebeke (BE); PSA Automobiles SA, 78300 Poissy (FR); Université De Reims Champagne-Ardenne, 51097 Reims Cedex (FR)
(72) Inventeur: JEUNESSE, Steve, 08210 Mouzon (FR); MARCEL, Valérie, 55150 Brandeville (FR); KHALFALLAH, Moussa, 29900 Concarneau (FR); ABBES, Boussad, 51360 Beaumont-sur-Vesle (FR); VANFLETEREN, François, 27300 Bernay (FR); ROUSSEAU, Frédéric, 28320 Gallardon (FR)
(74) Mandataire: Lavoix
(86) Numéro de dépôt international: PCT/EP2015/059420
(87) Numéro de publication internationale: WO 2016/045802

(56) Documents cités:
- EP-A1- 0 579 000
- WO-A1-02/02325
- WO-A1-92/12854
- WO-A1-2012/056202
- WO-A1-2015/055847

## Description

La présente invention concerne un procédé de fabrication d'une pièce composite structurelle, notamment pour véhicule automobile, ainsi que la pièce composite structurelle en résultant.

Plus particulièrement, l'invention concerne un procédé de fabrication d'une pièce composite structurelle, comprenant les étapes suivantes :
- une étape d'empilement, dans un moule chauffant, d'un premier mat, d'un écarteur et d'un second mat ; l'écarteur étant disposé entre le premier et le second mat ; au moins l'un des premier et second mats comportant un voile continu de fibres imprégné par une composition comportant une résine thermodurcissable, ledit voile comprenant une pluralité de fibres parallèles liées entre elles par la composition ;
- une étape de compression et de chauffage de l'empilement par le moule chauffant, le chauffage étant réalisé à une température et pendant une durée permettant une polymérisation ou réticulation de la résine thermodurcissable.

Un tel procédé, décrit par exemple dans le document WO2012/056202, permet d'obtenir, en une seule étape de moulage ou thermoformage, un panneau formé de deux mats, ou peaux composites, séparées par un écarteur. La résine présente dans les peaux assure également la solidarisation des peaux avec l'écarteur.

L'écarteur est en général en carton, sous forme d'une structure en nid d'abeilles. Une pression excessive lors de l'étape de compression provoquerait son écrasement, rendant le panneau inutilisable. C'est ce qui se produit lorsque les peaux sont constituées par des mats de fibres enchevêtrées produites par cardage-nappage-aiguilletage tel que décrit dans WO2012/056202.

Pour pallier ce problème, il est connu de remplacer le type de mats décrits dans WO2012/056202 par une superposition de voiles comprenant une pluralité de fibres parallèles, ou voiles unidirectionnels, possèdent une densité plus élevée que des nappes issues de cardage-nappage. Le procédé pour l'obtention de tels voiles est décrit par exemple dans WO2013/068355.

Cette densité élevée des voiles permet d'obtenir une densité optimale des peaux pour réaliser un panneau composite, sans pression excessive lors de l'étape de compression. En effet le mat constitué par la superposition des voiles avant thermoformage possède déjà pratiquement la densité requise pour le composite.

Cependant, lorsque la résine thermodurcissable est à base aqueuse et/ou génère de l'eau au cours de sa polymérisation ou réticulation, cette eau sous forme de vapeur peut perturber la solidarisation des peaux avec l'écarteur et/ou provoquer un affaissement local de l'écarteur. Le panneau est alors inexploitable.

Par ailleurs, la réaction de réticulation nécessite un taux d'eau minimal, de l'ordre de 5 à 10% en poids de résine, présent avant réticulation, afin de permettre la mobilité des molécules qui réagissent. Un manque d'eau « initial » conduit à une réticulation imparfaite, qui se traduit par des fibres mal collées entre elles et/ou des peaux mal collées à l'écarteur

De plus, même si le panneau ne présente pas les défauts décrits ci-dessus, l'eau ne pouvant être évacuée pendant la compression reste présente dans le produit avant démoulage ce qui limite la densité des peaux (porosité élevée dans le produit fini) et donc les performances mécaniques du panneau.

La seule façon connue pour limiter ces problèmes est de minimiser l'apport d'eau initial en contrôlant au mieux le taux d'humidité dans le voile au sortir de l'étape d'imprégnation, par exemple en le limitant entre 5 et 10 %.

Or, d'une part, contrôler aussi finement et maintenir un taux d'humidité n'est pas chose aisée, en particulier à cause du stockage qui peut être long. D'autre part, une porosité élevée des peaux amène à dégrader les performances mécaniques du panneau.

La présente invention a pour but de fournir un procédé simple de fabrication d'une pièce composite structurelle, permettant de conserver une humidité optimale de la résine sans que la vapeur d'eau générée par le chauffage ne perturbe l'intégrité de la pièce.

Un deuxième but de l'invention est de réaliser une pièce composite comportant des peaux de densité élevée, donc de faible porosité, constituant de véritables composites.

Un autre but de l'invention est de faciliter une imprégnation et un conditionnement du voile.

A cet effet, l'invention se rapporte à un procédé de fabrication d'une pièce composite structurelle du type précité, dans lequel :
- l'étape d'empilement comporte la disposition, dans le moule chauffant, d'une première et d'une seconde couches filtrantes, la première et la seconde couches filtrantes étant respectivement disposées au contact du premier et du second mats, du côté opposé à l'écarteur ; la première et la seconde couches filtrantes étant poreuses à la vapeur d'eau et relativement moins poreuses à la résine thermodurcissable ; et
- le moule chauffant comporte des moyens d'évacuation de vapeur d'eau formée lors de l'étape de compression et de chauffage.

Suivant d'autres aspects avantageux de l'invention, le procédé comporte l'une ou plusieurs des caractéristiques suivantes, prises isolément ou suivant toutes les combinaisons techniques possibles :
- la composition comportant la résine thermodurcissable est une solution aqueuse et/ou la résine thermodurcissable génère de l'eau au cours de sa polymérisation ou réticulation ;
- au moins l'une des première et seconde couches filtrantes a une résistance au passage de l'air comprise entre 30 N.s/m³ et 300 N.s/m³, de préférence comprise entre 50 N.s/m³ et 200 N.s/m³ ;
- le procédé comprend au préalable une étape d'aspersion d'eau sur le premier mat et/ou sur le second mat ;
- l'étape de compression et de chauffage conduit à la fixation de la première et de la seconde couches filtrantes, respectivement sur le premier et sur le second mats ;
- le procédé comprend au préalable la fabrication d'un mat, ladite fabrication comprenant les étapes suivantes : une étape de fourniture d'un voile continu de fibres parallèles entre elles, une étape d'imprégnation du voile par une composition comportant une résine thermodurcissable, et une étape de séchage du voile ;
- la fourniture du voile continu comprend les étapes suivantes : une étape d'amenée en parallèle d'une pluralité de rubans disjoints de fibres, une étape de dispersion des rubans adjacents à travers un champ de pointes pour former une bande de fibres parallèles, et une étape de mise sous tension et d'étirage de la bande dans le champ de pointes parallèlement à un axe de défilement ;
- l'étape d'empilement du premier et/ou du second mats comprend l'empilement dans le moule chauffant d'une pluralité de voiles continus de fibres parallèles ;
- les fibres parallèles de chaque voile sont disposées de manière à former un angle non nul, préférentiellement un angle droit, avec les fibres parallèles de chaque autre voile adjacent ;
- le procédé comporte, avant l'étape d'empilement, les étapes suivantes : définition d'une masse surfacique souhaitée pour le premier mat et pour le second mat après imprégnation par la composition comprenant la résine ; calcul d'un entrefer entre l'écarteur et chaque paroi du moule, sur la base de la masse surfacique de chaque mat, de l'épaisseur de chaque couche filtrante et de l'extrait sec de la résine, sans tenir compte de la teneur en eau de la résine.

L'invention se rapporte en outre à une pièce composite structurelle susceptible d'être issue d'un procédé tel que décrit ci-dessus, ladite pièce comportant un premier mat, un écarteur et un second mat, l'écarteur étant disposé entre le premier mat et le second mat, au moins l'un des premier et second mats comportant un voile continu de fibres imprégné par une composition comportant une résine thermodurcissable, ledit voile comprenant une pluralité de fibres parallèles liées entre elles par la composition, ladite pièce comportant une première et une seconde couches respectivement disposées au contact du premier et du second mats, du côté opposé à l'écarteur, la première et la seconde couches étant poreuses à la vapeur d'eau et relativement moins poreuses à la résine thermodurcissable.

L'invention sera mieux comprise à la lecture de la description qui va suivre, donnée uniquement à titre d'exemple non limitatif et faite en se référant aux dessins sur lesquels :
- la figure 1 est une vue en coupe d'une pièce composite structurelle selon un mode de réalisation de l'invention ;
- la figure 2 est une vue en coupe d'un dispositif de fabrication de la pièce composite de la figure 1, durant une étape d'un procédé de fabrication selon un mode de réalisation de l'invention ;
- la figure 3 est une vue partielle, en coupe, du dispositif de la figure 2, durant une autre étape dudit procédé de fabrication.

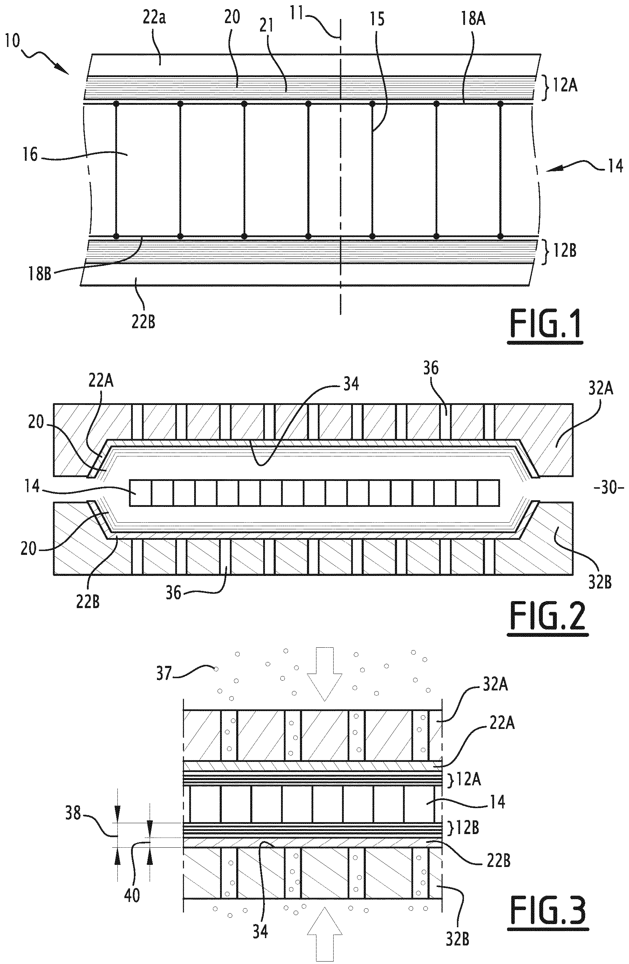

La figure 1 est une vue en coupe d'une pièce composite structurelle 10 de véhicule automobile. La pièce 10 est une pièce structurante du véhicule automobile, par exemple un panneau, tel qu'une tablette arrière de masquage de coffre, un faux plancher d'habitacle ou de coffre, ou un sous-moteur.

On considère un axe 11, sensiblement perpendiculaire à un plan moyen de la pièce structurelle 10.

La pièce composite structurelle 10 comporte un premier 12A et un second 12B mat, et un écarteur 14, interposé entre les deux mats 12A, 12B.

L'écarteur 14 est de préférence formé d'un matériau léger, tel que du papier ou du carton. Avantageusement, l'écarteur 14 est réalisé à base d'une structure alvéolaire ou en nid d'abeille. Ainsi, l'écarteur 14 présente une pluralité de parois 15 sensiblement parallèles à l'axe 11. Les parois 15 délimitent des espaces centraux 16 de contour fermé, par exemple de forme polygonale, formant les alvéoles.

L'écarteur 14 comporte des faces 18A, 18B opposées, formées par les extrémités des parois 15 selon l'axe 11. Les faces 18A, 18B présentent ainsi une surface discontinue. Chaque mat 12A, 12B est fixé sur une face 18A, 18B.

La masse surfacique de l'écarteur 14 est de préférence faible, notamment inférieure à 1500 g/m² et plus préférentiellement comprise entre 400 g/m² et 1200 g/m².

Au moins l'un des premier 12A et second 12B mats comporte au moins un voile continu 20 de fibres, ledit voile 20 comprenant une pluralité de fibres parallèles liées entre elles par une résine thermodurcissable 21.

Le voile 20 est dit « voile unidirectionnel » ou « nappe unidirectionnelle », c'est-à-dire que les fibres du voile 20 sont disposées parallèlement les unes aux autres selon une direction longitudinale. De tels voiles sont notamment décrits dans le document WO2013/068355.

Avantageusement, au moins certaines des fibres du voile 20 sont des fibres longues, c'est-à-dire présentent une longueur supérieure à 20 centimètres, plus préférentiellement supérieure à 50 centimètres. La longueur des fibres longues est par exemple comprise entre 50 et 80 centimètres. Les fibres longues confèrent au voile 20 des propriétés intéressantes de résistance mécanique, comme décrit par exemple dans le document WO2013/068355.

Avantageusement, au moins certaines des fibres du voile 20 sont des fibres naturelles. Dans un mode de réalisation, toutes les fibres du voile 20 sont constituées de fibres longues naturelles. En variante, une partie des fibres du voile 20 est formé par des fibres artificielles ou synthétiques, distinctes des fibres longues naturelles, ou par un mélange de ces fibres.

Les fibres longues naturelles sont avantageusement des fibres extraites de végétaux, notamment des fibres de lin. En variante, les fibres longues naturelles sont des fibres de sisal, de jute, de chanvre, de kénaf. Des fibres artificielles sont par exemple choisies parmi les fibres de cellulose régénérée, comme la viscose.

Les fibres synthétiques sont par exemple des fibres polyoléfines, notamment choisies parmi les fibres de polyéthylène, de polypropylène, de polyester, de polyamide, de polyimide, et leurs mélanges. En variante, les fibres synthétiques sont des fibres bi-composantes formées d'un polymère et d'un copolymère, le polymère et son copolymère ayant des points de fusion différents.

Préférentiellement, les fibres synthétiques sont à base de polymères thermoplastiques, ce qui permet, lors d'une étape de thermoformage à la température de fusion du polymère, de réaliser un liage des fibres naturelles.

Avantageusement, la proportion massique de fibres longues d'origine naturelle du voile 20 est supérieure à 50% de la masse totale des fibres du voile 20.

Dans l'exemple représenté à la figure 1, chacun des premier 12A et second 12B mats comporte une pluralité de voiles 20 tels que décrits ci-dessus, ces voiles 20 étant empilés les uns sur les autres. Par exemple, chacun des mats 12A, 12B comporte entre trois et huit voiles empilés.

Avantageusement, les fibres parallèles de chaque voile 20 sont disposées de manière à former un angle non nul, notamment un angle droit, avec les fibres parallèles de chaque autre voile adjacent. Une telle disposition permet de renforcer le mat 12A, 12B correspondant, en fonction de l'orientation des contraintes de la pièce finie en situation.

Selon la fonction de destination de la pièce structurelle 10, les premier 12A et second 12B mats comportent le même nombre de voiles 20 empilés, ou en variante des nombres différents de voiles 20 empilés.

La résine 21 est préférentiellement une résine à base aqueuse, plus préférentiellement une résine acrylique. Ce type de résine présente un grand intérêt en association avec des fibres naturelles car son affinité avec ce type de fibres est excellente, pour un coût et un impact environnemental modérés. Un exemple de résine acrylique utilisable est commercialisé par BASF sous la dénomination Acrodur®.

Les faces externes de la pièce 10 sont formées d'une première 22A et d'une seconde 22B couches de surface. La première 22A et la seconde 22B couches de surface sont respectivement au contact du premier 12A et du second 12B mats.

La première 22A et la seconde 22B couches de surface sont préférentiellement formées d'un matériau de type non-tissé. Il s'agit par exemple d'une moquette ou d'un non-tissé de type filé fondu (« *spunbonded* »). Avantageusement, chaque couche 22A, 22B est rendue solidaire du mat 12A, 12B correspondant par imprégnation partielle de résine 21.

La première 22A et la seconde 22B couches de surface servent de parement extérieur à la pièce 10. Une autre fonction des couches 22A, 22B sera détaillée ci-dessous.

A cet effet, la première 22A et la seconde 22B couches de surface ont une porosité contrôlée. Plus précisément, la première 22A et la seconde 22B couches de surface sont poreuses à la vapeur d'eau et non poreuses à la résine thermodurcissable 21.

La porosité est notamment définie par la résistance au passage de l'air (RPA), mesurée selon la norme ISO 9053. Préférentiellement, au moins l'une des première 22A et seconde 22B couches de surface a une RPA comprise entre 30 N.s/m³ et 300 N.s/m³, plus préférentiellement comprise entre 50 N.s/m³ et 200 N.s/m³.

Un procédé de fabrication de la pièce structurelle 10 va maintenant être décrit.

Un tel procédé comporte tout d'abord la réalisation d'au moins un voile continu 20 de fibres. Un tel voile est par exemple fabriqué de la manière décrite dans le document WO2013/068355, selon les étapes suivantes : amenée en parallèle d'une pluralité de rubans disjoints de fibres ; dispersion des rubans adjacents à travers un champ de pointes pour former une bande de fibres parallèles ; mise sous tension et étirage de la bande dans le champ de pointes parallèlement à un axe de défilement.

De manière optionnelle, cette formation du voile 20 est suivie de l'ajout d'un liant apte à assurer la cohésion transversale des fibres les unes aux autres. Ce liant est par exemple de l'eau pulvérisée, apte à dissoudre les ciments naturels des fibres, qui collent ensuite les fibres entre elles en séchant. Cette étape optionnelle est décrite dans le document WO2013/068355.

Selon une variante, la cohésion des fibres entre elles est directement assurée par l'étape suivante du procédé, qui met en oeuvre l'imprégnation du voile par une composition comprenant la résine thermodurcissable 21.

De manière optionnelle, la composition comporte en outre au moins un adjuvant, tel qu'un tensioactif et/ou un épaississant. Comme indiqué ci-dessus, un exemple de compositions utilisables est la gamme de produits Acrodur® de BASF.

L'étape d'imprégnation peut être réalisée de différentes manières connues, telle qu'une vaporisation de la composition sur le voile ou une enduction par contact.

L'étape d'imprégnation est préférentiellement suivie d'un séchage, afin d'éliminer une partie de l'eau contenue dans la composition. Ce séchage permet à la résine d'assurer une certaine cohésion des fibres entre elles, sans réticuler. La liaison transitoire entre les fibres est relativement faible et n'a pour but que de permettre la manipulation du voile 20.

Le séchage est préférentiellement poussé jusqu'à ce que le pourcentage d'eau présente dans le voile soit inférieur à 5%, préférentiellement inférieur à 3%. Dans ce pourcentage d'eau, on ne prend pas en compte l'eau présente à l'intérieur des fibres elles-mêmes qui peut varier selon leur nature. Dans ce cas on parlera de séchage total et de voile sec.

Le voile 20 imprégné de résine 21 peut ainsi être conditionné pour stockage, par exemple sous forme de rouleau intercalé avec une feuille intermédiaire comme décrit dans le document WO2013/068355. Le voile 20 ainsi conditionné peut être transporté sur un lieu de moulage ou thermoformage, et éventuellement stocké à nouveau.

L'avantage de disposer d'un voile sec réside dans la possibilité d'utiliser pour le conditionnement un papier ordinaire. En effet lorsque de l'eau reste présente en trop grande quantité - au-delà de 5% - avec la résine dans le voile, celui-ci peut rester poisseux ou collant et adhérer à la feuille intercalaire ce qui cause des pertes de temps pendant la préparation des mats 12A, 12B. Il est alors nécessaire, pour éviter cet inconvénient, d'utiliser des intercalaires de type papiers ou films siliconés. Ces intercalaires n'étant pas réutilisables ils sont à considérer comme des consommables qui peuvent impacter significativement le prix du voile.

En variante au mode de réalisation ci-dessus, les étapes suivantes de moulage ou thermoformage, décrites ci-après, sont réalisées en sortie de ligne d'imprégnation du voile 20 par la composition comprenant la résine thermodurcissable 21.

La figure 2 représente un dispositif 30 de fabrication de la pièce composite 10 selon un mode de réalisation de l'invention. Le dispositif 30, en l'espèce un moule chauffant, comporte une première partie 32A et une seconde partie 32B. Les première et seconde parties 32A, 32B forment une surface interne 34 complémentaire de la forme souhaitée de la pièce 10.

Le moule chauffant 30 comporte des moyens d'évacuation de vapeur d'eau générée à l'intérieur du moule. Par exemple, des perforations 36 traversent une épaisseur d'au moins une, et préférentiellement des deux parties 32A, 32B. Plus précisément, les perforations 36 débouchent à la fois sur les surfaces internes 34 des parties 32A, 32B et sur l'extérieur du moule 30.

Le moule 30 comprend en outre des moyens (non représentés) de chauffage des parties 32A, 32B et de compression desdites parties 32A, 32B l'une contre l'autre.

Le moulage ou thermoformage de la pièce composite 10 comprend la disposition de la première 22A et de la seconde 22B couches de surface au contact des surfaces internes 34, respectivement de la première partie 32A et de la seconde partie 32B.

Des voiles 20 unidirectionnels imprégnés de résine 21 non réticulée, telle que décrits ci-dessus, sont ensuite empilés par-dessus la première 22A et la seconde 22B couches de surface, pour former respectivement le premier 12A et le second 12B mats. Comme indiqué ci-dessus, les voiles 20 d'un même mat 12A, 12B sont préférentiellement empilés de manière à croiser les directions des fibres de deux voiles 20 adjacents.

En variante, un ou plusieurs autres types de matériaux sont intercalés avec le ou les voiles 20 unidirectionnels pour former les mats 12A, 12B.

Préférentiellement, avant empilement dans le moule 30, les voiles 20 imprégnés de résine 21 non réticulée sont aspergés d'eau, par exemple par pulvérisation, afin de rétablir un taux d'humidité approprié à la réaction de réticulation. En effet, si les voiles 20 sont stockés de la manière décrite ci-dessus avant l'étape de moulage ou de thermoformage, il est possible que la quantité d'eau résiduelle dans la résine 21 soit insuffisante.

Préférentiellement, le taux d'humidité considéré comme approprié à la réaction de réticulation est d'au moins 5%. Cependant, un taux supérieur, par exemple supérieur à 10%, ne gêne généralement pas la réticulation. La quantité d'eau apportée lors de cette étape d'aspersion ne nécessite pas d'être contrôlée avec précision, ce qui facilite grandement la mise en oeuvre de cette étape.

Après empilement des couches formant les mats 12A, 12B, les deux parties 32A, 32B du moule sont disposées en vis-à-vis l'une de l'autre, l'écarteur 14 étant placé entre le premier 12A et le second 12B mats, comme représenté à la figure 2.

Le procédé comporte ensuite une étape de compression et de chauffage de l'empilement par le moule 30, comme représenté à la figure 3. La compression est effectuée par rapprochement l'une de l'autre des parties 32A, 32B du moule 30, comme symbolisé par les flèches blanches. Le chauffage est réalisé à une température et pendant une durée permettant la réticulation de la résine thermodurcissable 21. La température de chauffage est par exemple comprise entre 150°C et 250°C pour une résine acrylique.

En réticulant, la résine 21 lie fermement les fibres de chaque voile 20 entre elles, et les différents voiles 20 entre eux, ainsi que les mats 12A, 12B à l'écarteur 14. Préférentiellement, l'étape de compression et de chauffage conduit la résine 21 à occuper la totalité de l'espace entre les fibres des voiles 20 et des éventuels autres matériaux formant les mats 12A, 12B.

Les mats 12A, 12B formés de voiles 20 unidirectionnels sont denses et de faible épaisseur. La compression peut être réalisée à une pression relativement faible, ce qui permet d'éviter une détérioration de l'écarteur 14, notamment de sa structure en nid d'abeilles.

Le chauffage conduit à l'évaporation de l'eau imprégnant les voiles 20. De plus, la réticulation de certaines résines, comme les résines acryliques, génère de l'eau.

En raison de la porosité contrôlée de la première 22A et de la seconde 22B couches de surface, la vapeur d'eau 37 ainsi générée traverse les couches de surface 22A, 22B et est évacuée du moule 30 par les perforations 36. En revanche, les molécules de résine 21, de taille beaucoup plus importante que les molécules d'eau, sont retenues par les couches de surface 22A, 22B. Lesdites couches de surface 22A, 22B ont donc une fonction de filtration de la vapeur d'eau lors de l'étape de compression et de chauffage.

Avantageusement, lors de l'étape de compression et de chauffage, de la résine 21 réagit avec des fibres superficielles des couches de surface 22A, 22B et/ou imprègne lesdites fibres superficielles. A l'issue de l'étape de compression et de chauffage, la première 22A et la seconde 22B couches de surface se retrouvent donc fixées, respectivement sur le premier 12A et sur le second 12B mats.

Durant l'étape de compression, il convient de maintenir une distance 38, ou entrefer, entre l'écarteur 14 et la surface interne 34 du moule 30. Plus précisément, l'entrefer 38 représente la distance minimale entre l'écarteur 14 et la surface interne 34, c'est-à-dire la distance à la fin de l'étape de compression.

Avantageusement, l'entrefer 38 est choisi en fonction de la densité recherchée pour les peaux composites formées par les mats 12A, 12B après réticulation de la résine 21. Si l'entrefer 38 est insuffisant, la compression est trop importante et de la résine 21 risque de traverser les couches de surface 22A, 22B et de coller lesdites couches 22A, 22B à la surface interne 34 du moule 30. Au contraire, si l'entrefer 38 est trop important, la compression est insuffisante et le composite n'est pas assez densifié.

Un autre paramètre lié au choix de l'entrefer 38 est la quantité d'extrait sec de résine 21 dans les mats 12A, 12B. Par exemple, pour la pièce composite 10 de la figure 1, la masse surfacique souhaitée pour le composite formant les mats 12A, 12B est de 1.000 g/m². Le poids total des fibres formant les voiles 20 empilés pour former chaque mat 12A, 12B, comme à la figure 2, est par exemple de 400 g/m². La quantité d'extrait sec de résine 21 de chaque mat 12A, 12B doit donc être de 600 g/m².

La densité recherchée pour les composites formées par les mats 12A, 12B après réticulation est par exemple égale à 1. L'entrefer 38 doit donc correspondre à un poids de 1000 g/m² pour une densité de 1, soit 1 mm, additionné de l'épaisseur 40 de la couche de surface 22A ou 22B. A titre d'exemple, l'épaisseur 40 est de 0,2 mm pour une couche de surface de 120 g/m².

Ainsi, le procédé décrit ci-dessus permet une évacuation de la vapeur générée lors de l'étape de compression et de chauffage, sans que la résine 21 ne déborde du moule 30 par les perforations 36 et/ou ne bouche les perforations 36.

Par ailleurs, le choix de l'entrefer 38 dépend uniquement de la quantité d'extrait sec de résine dans les voiles 20 avant réticulation, et non du poids total de résine. La quantité d'eau dans la résine avant réticulation peut donc être modifiée à volonté. De l'eau peut notamment être pulvérisée sur les voiles 20 avant empilement dans le moule 30, comme décrit ci-dessus, afin de garantir un taux d'humidité favorable à la réaction de réticulation.

Par ailleurs ce procédé permet l'utilisation de voiles secs, ce qui évite l'utilisation d'intercalaires coûteux et un contrôle précis du taux d'humidité dans le voile.

Un tel procédé permet donc de s'affranchir des divers problèmes liés à l'eau, associés aux procédés existants. Ce procédé permet donc la réalisation de panneaux performants à faible coût.

En variante au mode de réalisation décrit ci-dessus, l'écarteur 14, préalablement à son introduction dans le moule entre les mats 12A et 12B, est enduit sur ses deux face 18A, 18B d'une colle qui réagira sous l'effet de la température du moule. Cette variante permet d'assurer un meilleur collage entre les mats 12A, 12B et l'écarteur 14, car la quantité de colle est mieux contrôlée que dans le cas où le collage est uniquement assuré par la résine 21 déjà présente dans les voiles.

Dans ce cas, le dispositif de moulage 30 décrit ci-dessus permet également d'évacuer l'eau éventuellement générée/relarguée par la colle durant l'étape de chauffage.

## Revendications

1. Procédé de fabrication d'une pièce composite structurelle (10), ledit procédé comprenant les étapes suivantes :
- une étape d'empilement, dans un moule chauffant (30), d'un premier mat (12A), d'un écarteur (14) et d'un second mat (12B) ; l'écarteur étant disposé entre le premier et le second mat ; au moins l'un des premier et second mats comportant un voile continu (20) de fibres imprégné par une composition comportant une résine thermodurcissable (21), ledit voile comprenant une pluralité de fibres parallèles liées entre elles par la composition ;
- une étape de compression et de chauffage de l'empilement par le moule chauffant, le chauffage étant réalisé à une température et pendant une durée permettant une polymérisation ou réticulation de la résine thermodurcissable ;
ledit procédé étant **caractérisé en ce que** :
- l'étape d'empilement comporte la disposition, dans le moule chauffant, d'une première (22A) et d'une seconde (22B) couches filtrantes, la première et la seconde couches filtrantes étant respectivement disposées au contact du premier (12A) et du second (12B) mats, du côté opposé à l'écarteur (14) ; la première et la seconde couches filtrantes étant poreuses à la vapeur d'eau et relativement moins poreuses à la résine thermodurcissable ; et
- le moule chauffant comporte des moyens (36) d'évacuation de vapeur d'eau (37) formée lors de l'étape de compression et de chauffage.

2. Procédé selon la revendication 1, dans lequel la composition comportant la résine thermodurcissable (21) est une solution aqueuse et/ou la résine thermodurcissable génère de l'eau au cours de sa polymérisation ou réticulation.

3. Procédé selon la revendication 1 ou 2, dans lequel au moins l'une des première (22A) et seconde (22B) couches filtrantes a une résistance au passage de l'air comprise entre 30 N.s/m³ et 300 N.s/m³, de préférence comprise entre 50 N.s/m³ et 200 N.s/m³.

4. Procédé selon l'une des revendications précédentes, comprenant au préalable une étape d'aspersion d'eau sur le premier mat (12A) et/ou sur le second mat (12B).

5. Procédé selon l'une des revendications précédentes, dans lequel l'étape de compression et de chauffage conduit à la fixation de la première (22A) et de la seconde (22B) couches filtrantes, respectivement sur le premier (12A) et sur le second (12B) mats.

6. Procédé selon l'une des revendications précédentes, comprenant au préalable la fabrication d'un mat (12A, 12B), ladite fabrication comprenant les étapes suivantes :
- une étape de fourniture d'un voile (20) continu de fibres parallèles entre elles,
- une étape d'imprégnation du voile par une composition comportant une résine thermodurcissable (21), et
- une étape de séchage du voile.

7. Procédé selon la revendication 6, dans lequel la fourniture du voile continu (20) comprend les étapes suivantes :
- une étape d'amenée en parallèle d'une pluralité de rubans disjoints de fibres ;
- une étape de dispersion des rubans adjacents à travers un champ de pointes pour former une bande de fibres parallèles ;
- une étape de mise sous tension et d'étirage de la bande dans le champ de pointes parallèlement à un axe de défilement.

8. Procédé selon l'une des revendications précédentes, dans lequel l'étape d'empilement du premier (12A) et/ou du second (12B) mats comprend l'empilement dans le moule chauffant (30) d'une pluralité de voiles continus (20) de fibres parallèles.

9. Procédé selon la revendication 8, dans lequel les fibres parallèles de chaque voile (20) sont disposées de manière à former un angle non nul, préférentiellement un angle droit, avec les fibres parallèles de chaque autre voile adjacent.

10. Procédé selon l'une quelconque des revendications précédentes, comportant avant l'étape d'empilement les étapes suivantes :
- définition d'une masse surfacique souhaitée pour le premier mat (12A) et pour le second mat (12B) après imprégnation par la composition comprenant la résine ;
- calcul d'un entrefer entre l'écarteur et chaque paroi du moule, sur la base de la masse surfacique de chaque mat (12A, 12B), de l'épaisseur de chaque couche filtrante (22A, 22B) et de l'extrait sec de la résine, sans tenir compte de la teneur en eau de la résine.

11. Pièce composite structurelle (10) susceptible d'être issue d'un procédé selon l'une des revendications précédentes, ladite pièce comportant un premier mat (12A), un écarteur (14) et un second mat (12B), l'écarteur (14) étant disposé entre le premier mat (12A) et le second mat (12B), au moins l'un des premier et second mats comportant un voile continu (20) de fibres imprégné par une composition comportant une résine thermodurcissable (21), ledit voile comprenant une pluralité de fibres parallèles liées entre elles par la composition,
**caractérisée en ce qu'**elle comporte une première (22A) et une seconde (22B) couches, respectivement disposées au contact du premier (12A) et du second (12B) mats, du côté opposé à l'écarteur (14) ; la première et la seconde couches étant poreuses à la vapeur d'eau et relativement moins poreuses à la résine thermodurcissable.

## Patentansprüche

1. Verfahren zum Herstellen eines strukturellen Verbundteils (10), wobei das Verfahren die folgenden Schritte aufweist:
- einen Schritt des Stapelns einer ersten Matte (12A), eines Abstandshalters (14) und einer zweiten Matte (12B) in einer heizenden Form (30), wobei der Abstandshalter zwischen der ersten und der zweiten Matte angeordnet ist, wobei mindestens eine von der ersten und der zweiten Matte ein durchgehendes Faservlies (20) aufweist, das mit einer Zusammensetzung imprägniert ist, die ein duroplastisches Harz (21) aufweist, wobei das Vlies eine Mehrzahl von parallelen Fasern aufweist, die durch die Zusammensetzung miteinander verbunden sind,
- einen Schritt des Komprimierens und des Erhitzens des Stapels durch die heizende Form, wobei das Erhitzen bei einer Temperatur und während einer Dauer erfolgt, die Polymerisieren oder Retikulieren des duroplastischen Harzes ermöglichen,
wobei das Verfahren **dadurch gekennzeichnet ist, dass**:
- der Schritt des Stapelns das Anordnen einer ersten (22A) und einer zweiten (22B) Filterschicht in der heizenden Form aufweist, wobei die erste und die zweite Filterschicht jeweils in Kontakt mit der ersten (12A) und der zweiten (12B) Matte auf der zum Abstandshalter (14) entgegengesetzten Seite angeordnet sind, wobei die erste und die zweite Filterschicht gegenüber Wasserdampf porös und gegenüber dem duroplastischen Harz relativ weniger porös sind, und
- die heizende Form Mittel (36) zum Ableiten von Wasserdampf (37) aufweist, der während des Schrittes des Komprimierens und des Erhitzens gebildet wird.

2. Verfahren gemäß Anspruch 1, wobei die Zusammensetzung, die das duroplastische Harz (21) aufweist, eine wässrige Lösung ist, und/oder das duroplastische Harz während seiner Polymerisierung oder Retikulation Wasser erzeugt.

3. Verfahren gemäß Anspruch 1 oder 2, wobei mindestens eine von der ersten (22A) und der zweiten (22B) Filterschicht einen Widerstand gegenüber dem Hindurchströmen von Luft von zwischen 30 N.s/m³ und 300 N.s/m³, vorzugsweise von zwischen 50 N.s/m³ und 200 N.s/m³ hat.

4. Verfahren gemäß einem der vorhergehenden Ansprüche, aufweisend im Vorfeld einen Schritt des Besprengens der ersten Matte (12A) und/oder der zweiten Matte (12B) mit Wasser.

5. Verfahren gemäß einem der vorhergehenden Ansprüche, wobei der Schritt des Komprimierens und des Erhitzens zum Fixieren der ersten (22A) und der zweiten (22B) Filterschicht auf der ersten (12A) bzw. auf der zweiten (12B) Matte führt.

6. Verfahren gemäß einem der vorhergehenden Ansprüche, aufweisend im Vorfeld das Herstellen einer Matte (12A, 12B), wobei das Herstellen die folgenden Schritte aufweist:
- einen Schritt des Bereitstellens eines durchgehenden Vlieses (20) von Fasern, die parallel zueinander sind,
- einen Schritt des Imprägnierens des Vlieses mit einer Zusammensetzung, die ein duroplastisches Harz (21) aufweist, und
- einen Schritt des Trocknens des Vlieses.

7. Verfahren gemäß Anspruch 6, wobei das Bereitstellen des durchgehenden Vlieses (20) die folgenden Schritte aufweist:
- einen Schritt des parallelen Zuführens einer Mehrzahl von getrennten Faserbändern,
- einen Schritt des Verteilens der benachbarten Bänder über ein Feld von Spitzen, um ein Band von parallelen Fasern auszubilden,
- einen Schritt des unter-Spannung-Setzens und des Streckens des Bandes im Feld von Spitzen parallel zu einer Laufachse.

8. Verfahren gemäß einem der vorhergehenden Ansprüche, wobei der Schritt des Stapelns der ersten (12A) und/oder der zweiten (12B) Matte das Stapeln einer Mehrzahl von durchgehenden Vliesen (20) aus parallelen Fasern in der heizenden Form (30) aufweist.

9. Verfahren gemäß Anspruch 8, wobei die parallelen Fasern jedes Vlieses (20) angeordnet sind, um mit den parallelen Fasern jedes anderen benachbarten Vlieses einen Winkel von ungleich Null, vorzugsweise einen rechten Winkel auszubilden.

10. Verfahren gemäß irgendeinem der vorhergehenden Ansprüche, welches vor dem Schritt des Stapelns die folgenden Schritte aufweist:
- Definieren einer gewünschten flächenbezogenen Masse für die erste Matte (12A) und für die zweite Matte (12B) nach dem Imprägnieren mit der Zusammensetzung, die das Harz enthält,
- Berechnen eines Luftspaltes zwischen dem Abstandshalter und jeder Wand der Form auf der Grundlage der flächenbezogenen Masse jeder Matte (12A, 12B), der Dicke jeder Filterschicht (22A, 22B) und der Trockensubstanz des Harzes ohne Berücksichtigung des Wassergehalts des Harzes.

11. Strukturelles Verbundteil (10), das geeignet ist, aus einem Verfahren gemäß einem der vorhergehenden Ansprüche hervorzugehen, wobei das Teil eine erste Matte (12A), einen Abstandshalter (14) und eine zweite Matte (12B) aufweist, wobei der Abstandshalter (14) zwischen der ersten Matte (12A) und der zweiten Matte (12B) angeordnet ist, mindestens eine von der ersten und der zweiten Matte ein durchgehendes Faservlies (20) aufweist, das mit einer Zusammensetzung imprägniert ist, die ein duroplastisches Harz (21) aufweist, wobei das Vlies eine Mehrzahl von parallelen Fasern aufweist, die durch die Zusammensetzung miteinander verbunden sind,
**dadurch gekennzeichnet, dass** es eine erste (22A) und eine zweite (22B) Schicht aufweist, die jeweils in Kontakt mit der ersten (12A) und der zweiten (12B) Matte auf der Seite entgegengesetzt zum Abstandshalter (14) angeordnet sind, wobei die erste und die zweite Schicht gegenüber Wasserdampf porös sind und gegenüber dem duroplastischen Harz relativ weniger porös sind.

## Claims

1. A method for manufacturing a structural composite part (10), said method comprising the following steps:
- a step for stacking, in a heated mold (30), a first mat (12A), a spacer (14) and a second mat (12B); the spacer being positioned between the first and the second mat; at least one of the first and second mats including a continuous web (20) of fibers impregnated with a composition including a thermosetting resin (21), said web comprising a plurality of parallel fibers bound together by the composition;
- a step for compressing and heating the stack with the heated mold, the heating being performed at a temperature and for a duration allowing polymerization or cross-linking of the thermosetting resin;
said method being **characterized in that**:
- the stacking step includes the positioning, in the heated mold, of a first (22A) and a second (22B) filtering layers, the first and the second filtering layers being respectively positioned in contact with the first (12A) and the second (12B) mats, on the side opposite to the spacer (14); the first and the second filtering layers being porous to steam and relatively less porous to the thermosetting resin; and
- the heated mold includes means (36) for removing steam (37) formed during the compression and heating step.

2. The method according to claim 1, wherein the composition including the thermosetting resin (21) is an aqueous solution and/or the thermosetting resin generates water during its polymerization or cross-linking.

3. The method according to claim 1 or 2, wherein at least one of the first (22A) and second (22B) filtering layers has a resistance to the passage of air comprised between 30 N.s/m³ and 300 N.s/m³, preferably comprised between 50 N.s/m³ and 200 N.s/m³.

4. The method according to one of the preceding claims, comprising beforehand a water spraying step on the first mat (12A) and/or on the second mat (12B).

5. The method according to one of the preceding claims, wherein the compression and heating step leads to the attachment of the first (22A) and of the second (22B) filtering layers, on the first (12A) and on the second (12B) mats respectively.

6. The method according to one of the preceding claims, comprising beforehand the manufacturing of a mat (12A, 12B), said manufacturing comprising the following steps:
- a step for providing a continuous web (20) of fibers parallel with each other,
- a step for impregnating the web with a composition including a thermosetting resin (21), and
- a step for drying the web.

7. The method according to claim 6, wherein the provision of the continuous web (20) comprises the following steps:
- a step for bringing into parallel a plurality of disconnected ribbons of fibers;
- a step for dispersing adjacent ribbons through a field of spikes in order to form a strip of parallel fibers;
- a step for tensioning and stretching the strip in the field of spikes parallel to a traveling axis.

8. The method according to one of the preceding claims, wherein the step for stacking the first (12A) and/or the second (12B) mats comprises the stacking in the heated mold (30) of a plurality of continuous webs (20) of parallel fibers.

9. The method according to claim 8, wherein the parallel fibers of each web (20) are positioned so as to form a non-zero angle, preferentially a right angle, with the parallel fibers of each other adjacent web.

10. The method according to any of the preceding claims, including before the stacking step the following steps:
- defining a desired surface mass for the first mat (12A) and for the second mat (12B) after impregnation by the composition comprising the resin;
- calculating an air gap between the spacer and each wall of the mold on the basis of the surface mass of each mat (12A, 12B), of the thickness of each filtering layer (22A, 22B) and of the dry extract of the resin, without taking into account the water content of the resin.

11. A structural composite part (10) which may stem from a method according to one of the preceding claims, said part including a first mat (12A), a spacer (14) and a second mat (12B), the spacer (14) being positioned between the first mat (12A) and the second mat (12B), at least one of the first and second mats including a continuous web (20) of fibers impregnated with a composition including a thermosetting resin (21), said web comprising a plurality of parallel fibers bound together by the composition,
**characterized in that** it includes a first (22A) and a second (22B) layers, respectively positioned in contact with the first (12A) and the second (12B) mats, on the side opposite to the spacer (14); the first and the second layers being porous to steam and relatively less porous to the thermosetting resin.
